# EUROPEAN PATENT APPLICATION

(11) **EP 4 725 648 A1**
(43) Date of publication of application: **15.04.2026**
(21) Application number: 24895790.4
(22) Date of filing: 20.08.2024
(51) Int. Cl.: B25B 11/00

(54) **FIXING DEVICE AND BATTERY CELL PRODUCTION SYSTEM**

(30) Priority: 30.11.2023 CN 202323283773 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: WANG, Tengteng, Ningde, Fujian 352100 (CN); PAN, Wensheng, Ningde, Fujian 352100 (CN); YU, Xinglu, Ningde, Fujian 352100 (CN); FAN, Xiang, Ningde, Fujian 352100 (CN)
(74) Representative: Ran, Handong
(86) International application number: PCT/CN2024/113396
(87) International publication number: WO 2025/112689

(57) **Abstract**

The present application provides a fixing device and a battery cell production system. The fixing device is used for fixing a battery cell prefabricated part and comprises a first supporting base, a bearing member, a clamping assembly and a driving assembly; the clamping assembly is arranged on the first supporting base; the clamping assembly comprises a first clamping member, a second clamping member, a third clamping member and a fourth clamping member, and the first clamping member and the second clamping member are arranged on two opposite sides of the bearing member in a first direction; the third clamping member and the fourth clamping member are arranged on two opposite sides of the bearing member in a second direction; the driving assembly is configured to be capable of driving the first clamping member and the second clamping member to be far away from or close to each other in the first direction, and driving the third clamping member and the fourth clamping member to be far away from or close to each other in the second direction. In this way, a space for containing the battery cell prefabricated part can be adaptively adjusted in the horizontal direction on the basis of the shape and/or size of the battery cell prefabricated part, and the application range of the fixing device in the present application is widened.

## Description

### CROSS-REFERENCE TO RELATED APPLICATIONS

This application is based on and claims priority to Chinese Patent Application 2023232837739 filed on November 30, 2023, which is incorporated herein by reference in its entirety.

### TECHNICAL FIELD

The present application relates to the field of batteries, and in particular, to a fixing apparatus and a battery cell production system.

### BACKGROUND

Welding is a critical step in the battery production process. Both during the welding process and during the dust removal process after welding, it is necessary to fix a battery cell preform. In the prior art, the space for accommodating the battery cell preform in a fixing apparatus for fixing a battery is fixed and cannot be adaptively adjusted for sizes and/or shapes of different battery cell preforms, resulting in the need for different fixing apparatuses when preparing different battery cells, which increases production costs and limits the flexibility of producing batteries.

### SUMMARY

The main technical problem addressed by the present application is to provide a fixing apparatus and a battery cell production system that can be applied to produce battery cells of different shapes and/or sizes.

To address the above technical problem, in a first aspect, a technical solution adopted by the present application is to provide a fixing apparatus, where the fixing apparatus is configured to fix a battery cell preform and includes a first support base, a carrier, a clamping assembly, and a drive assembly, where the carrier is disposed on top of the first support base; the clamping assembly is disposed on the first support base; the clamping assembly includes a first clamping member, a second clamping member, a third clamping member, and a fourth clamping member, the first clamping member and the second clamping member are disposed on opposite sides of the carrier in a first direction, and the third clamping member and the fourth clamping member are disposed on opposite sides of the carrier in a second direction; the second direction and the first direction intersect and both are substantially parallel to a horizontal direction; and the drive assembly is disposed on the first support base and connected to the clamping assembly, the drive assembly is configured to be capable of driving the first clamping member and the second clamping member to move away from or toward each other in the first direction, and capable of driving the third clamping member and the fourth clamping member to move away from or toward each other in the second direction.

In the above technical solution, the clamping assembly including the first clamping member, the second clamping member, the third clamping member, and the fourth clamping member is provided, and the drive assembly is capable of driving the first clamping member and the second clamping member to move away from or toward each other in the first direction, and capable of driving the third clamping member and the fourth clamping member to move away from or toward each other in the second direction, such that the space for accommodating the battery cell preform in the fixing apparatus can be adaptively adjusted in the horizontal direction according to the shape and/or size of the battery cell preform.

In some embodiments thereof, the drive assembly includes a clamp opening mechanism and an elastic mechanism, where the clamp opening mechanism is connected to the clamping assembly; the clamp opening mechanism is configured to be capable of driving the first clamping member and the second clamping member to move away from each other in the first direction, and capable of driving the third clamping member and the fourth clamping member to move away from each other in the second direction; and the elastic mechanism is connected to the clamping assembly, and the elastic mechanism is configured to be capable of driving the first clamping member and the second clamping member to move toward each other in the first direction, and capable of driving the third clamping member and the fourth clamping member to move toward each other in the second direction.

In the above technical solution, the clamp opening mechanism is configured to move the first clamping member and the second clamping member away from each other, and the third clamping member and the fourth clamping member away from each other; and the elastic mechanism is configured to move the first clamping member and the second clamping member toward each other, and the third clamping member and the fourth clamping member toward each other, resulting in a simple structure and convenient operation.

In some embodiments thereof, the clamp opening mechanism includes a pressing block and a linkage mechanism. The pressing block and the first clamping member are disposed on a same side of the carrier; and the linkage mechanism is connected to the pressing block, the second clamping member, the third clamping member, and the fourth clamping member respectively; where when an external force is applied to the pressing block in the first direction, the linkage mechanism drives the second clamping member to move away from the first clamping member, drives the third clamping member and the fourth clamping member to move away from each other in the second direction, and drives the elastic mechanism to generate elastic potential energy; and when the external force applied to the pressing block disappears, the elastic mechanism releases the elastic potential energy, drives the second clamping member to move toward the first clamping member, drives the third clamping member and the fourth clamping member to move toward each other in the second direction, and drives the pressing block to return to its original position through the linkage mechanism.

In the above technical solution, the clamp opening mechanism including the pressing block and the linkage mechanism is provided, and with an external force applied to the pressing block, the linkage mechanism can drive the second clamping member to move away from the first clamping member, and drive the third clamping member and the fourth clamping member to move away from each other in the second direction, and when the external force applied to the pressing block is withdrawn, the elastic mechanism can drive the second clamping member to move toward the first clamping member, and drive the third clamping member and the fourth clamping member to move toward each other in the second direction. This achieves the variation of the clamping space for the battery cell preform merely through application or release of pressure on the pressing block, resulting a simple and efficient structure with a high level of automation.

In some embodiments thereof, the fixing apparatus further includes a second support base, the second support base being disposed at a bottom of the first support base; where the first support base is configured to be capable of sliding relative to the second support base in the first direction.

In the above technical solution, the fixing apparatus including the second support base is provided, and the first support base is capable of sliding relative to the second support base in the first direction. When a welding apparatus or a dust removal apparatus needs to be positioned with respect to the battery cell preform, the battery cell preform is allowed to float in the first direction, reducing the risk of damaging the battery cell preform due to excessive movement distance of the welding apparatus or the dust removal apparatus, and also playing a role in determining the defocus amount.

In some embodiments thereof, the second support base is provided with a slide rail, a first limiting block, and a second limiting block; the first support base is slidably disposed on the slide rail; the first limiting block and the second limiting block are configured to be capable of limiting the range of sliding of the first support base relative to the second support base in the first direction.

In the above technical solution, the slide rail, the first limiting block, and the second limiting block are provided on the second support base, where the provision of the slide rail functions as a track for the sliding of the first support base, reducing the risk of wobbling in other directions, and the first limiting block and the second limiting block are provided to limit the range of sliding of the first support base, reducing the risk of the first support base slipping off.

In some embodiments thereof, in the first direction, the fixing apparatus has a front side and a back side; the first limiting block is disposed on the back side of the first support base, the second limiting block is disposed on the front side of the first support base; and a first spring is disposed between the first limiting block and the first support base.

In the above technical solution, the first spring is provided between the first limiting block and the first support base, when the external force is withdrawn, the first spring provides elastic force, which can drive the first support base to return to the original position, so the fixing apparatus provided in the present application can be used repeatedly.

In some embodiments thereof, the fixing apparatus further includes a traction fixing member, the traction fixing member being fixed on the second support base.

In the above technical solution, the provision of the traction fixing member enables the mobile fixing apparatus to follow a traction mechanism to move to a predetermined station for corresponding operations, improving the degree of automation.

In some embodiments thereof, the traction fixing member is provided with a traction groove.

In the above technical solution, the provision of the traction groove facilitates the insertion and disengagement of a traction member of the traction mechanism.

In some embodiments thereof, the fixing apparatus further includes a first connection mechanism and a second connection mechanism, where the first connection mechanism and the second connection mechanism are fixed on the second support base and disposed on opposite sides of the first support base in the second direction.

In the above technical solution, the provision of the first connection mechanism and the second connection mechanism on opposite sides of the first support base facilitates the mounting and fixation of two adjacent fixing apparatuses. Multiple fixing apparatuses provided in the present application can be applied to large-scale production processes, and the mounting and disassembly of the fixing apparatuses can be facilitated through traction, making the process of producing batteries more flexible.

In some embodiments thereof, the first connection mechanism includes a first connection arm, and a surface of the first connection arm is provided with a connection groove; where the connection groove extends in a third direction, the connection groove has opposite first end and second end in the third direction, the first end and the second end are both open ends, and the third direction is a vertical direction. The second connection mechanism includes a second connection arm and a roller, the roller being disposed on the second connection arm; where the roller is configured to be capable of entering the connection groove from the first end of the connection groove in the third direction and sliding out of the connection groove from the second end of the connection groove.

In the above technical solution, the first connection mechanism includes the first connection arm, the surface of the first connection arm is provided with the connection groove, and the second connection mechanism includes the second connection arm and the roller, the roller being disposed on the second connection arm. The roller is capable of entering the connection groove from the first end of the connection groove in the third direction and sliding out of the connection groove from the second end of the connection groove, two adjacent fixing apparatuses can be mounted by sliding, and the design of the roller can reduce friction between the first connection mechanism and the second connection mechanism during mounting, improving safety performance and service life.

To address the above technical problem, in a second aspect, another technical solution adopted by the present application is to provide a battery cell production system, where the battery cell production system includes the fixing apparatus provided in any one of the above embodiments.

In the above technical solution, the clamping assembly including the first clamping member, the second clamping member, the third clamping member, and the fourth clamping member is provided, and the drive assembly is capable of driving the first clamping member and the second clamping member to move away from or toward each other in the first direction, and capable of driving the third clamping member and the fourth clamping member to move away from or toward each other in the second direction, such that the space for accommodating the battery cell preform in the fixing apparatus can be adaptively adjusted in the horizontal direction according to the shape and/or size of the battery cell preform.

In some embodiments thereof, the battery cell production system further includes a first guide rail, a welding apparatus, and a dust removal apparatus. The first guide rail extends in the second direction, the welding apparatus and the dust removal apparatus are disposed on a same side of the first guide rail; and the fixing apparatus is slidably disposed on the first guide rail and is configured to pass through the welding apparatus and the dust removal apparatus in sequence.

In the above technical solution, the battery cell production system further includes the first guide rail, the welding apparatus, and the dust removal apparatus; the first guide rail extends in the second direction, the welding apparatus and the dust removal apparatus are disposed on a same side of the first guide rail; and the fixing apparatus is slidably disposed on the first guide rail, and is configured to pass through the welding apparatus and the dust removal apparatus in sequence, such that one fixing apparatus can enable the battery cell preform to participate in different processes, improving production efficiency.

In some embodiments thereof, the fixing apparatus is any one of the fixing apparatus the above having the traction fixing member; the battery cell production system further includes a second guide rail and a traction mechanism, where the second guide rail is disposed parallel to the first guide rail on a side away from the welding apparatus, the traction mechanism is slidably disposed on the second guide rail, and the traction mechanism is configured to pull the fixing apparatus to move in the second direction through the traction fixing member.

In the above technical solution, the provision of the traction fixing member enables the mobile fixing apparatus to follow a traction mechanism to move to a predetermined station for corresponding operations, improving the degree of automation. The provision of the traction groove facilitates the insertion and disengagement of a traction member of the traction mechanism, and the traction wheel can slide in the traction groove, reducing friction. The provision of the first connection mechanism and the second connection mechanism on opposite sides of the first support base facilitates the mounting and fixation of two adjacent fixing apparatuses. Multiple fixing apparatuses provided in the present application can be applied to large-scale production processes, and the mounting and disassembly of the fixing apparatuses can be facilitated through traction, making the process of producing batteries more flexible. The first connection mechanism includes the first connection arm, the surface of the first connection arm is provided with the connection groove, and the second connection mechanism includes the second connection arm and the roller, the roller being disposed on the second connection arm. The roller is capable of entering the connection groove from the first end of the connection groove in the third direction and sliding out of the connection groove from the second end of the connection groove, two adjacent fixing apparatuses can be mounted by sliding, and the design of the roller can reduce friction between the first connection mechanism and the second connection mechanism during mounting, improving safety performance and service life.

In some embodiments thereof, the fixing apparatus includes a first connection mechanism and a second connection mechanism fixed on the second support base and disposed on opposite sides of the first support base in the second direction.

Optionally, in the fixing apparatus, the first connection mechanism includes the first connection arm, and a surface of the first connection arm is provided with a connection groove; where the connection groove extends in a third direction, the connection groove has opposite first end and second end in the third direction, the first end and the second end are both open ends, and the third direction is the vertical direction; and the second connection mechanism includes a second connection arm and a roller, the roller being disposed on the second connection arm; where the roller is configured to be capable of entering the connection groove from the first end of the connection groove in the third direction and sliding out of the connection groove from the second end of the connection groove.

Multiple fixing apparatuses are arranged side by side on the first guide rail and connected to each other; while one of two adjacent fixing apparatuses reaches a station at which the welding apparatus is located, the other reaches a station at which the dust removal apparatus is located; and the traction mechanism drives the multiple fixing apparatuses to move together in the second direction by pulling a leading fixing apparatus.

In the above technical solution, the provision of the first connection mechanism and the second connection mechanism on opposite sides of the first support base facilitates the mounting and fixation of two adjacent fixing apparatuses. Multiple fixing apparatuses provided in the present application can be applied to large-scale production processes, and the mounting and disassembly of the fixing apparatuses can be facilitated through traction, making the process of producing batteries more flexible. The first connection mechanism includes the first connection arm, the surface of the first connection arm is provided with the connection groove, and the second connection mechanism includes the second connection arm and the roller, the roller being disposed on the second connection arm. The roller is capable of entering the connection groove from the first end of the connection groove in the third direction and sliding out of the connection groove from the second end of the connection groove, two adjacent fixing apparatuses can be mounted by sliding, and the design of the roller can reduce friction between the first connection mechanism and the second connection mechanism during mounting, improving safety performance and service life. While one of two adjacent fixing apparatuses reaches a station at which the welding apparatus is located, the other reaches a station at which the dust removal apparatus is located, which allows slag cleaning to be performed immediately after welding of the battery cell preform in the fixing apparatus, improving production efficiency.

In some embodiments thereof, in the fixing apparatus, the first connection mechanism includes a first connection arm, and a surface of the first connection arm is provided with a connection groove; where the connection groove extends in the third direction, the connection groove has opposite first end and second end in the third direction, the first end and the second end are both open ends, and the third direction is the vertical direction; and the second connection mechanism includes a second connection arm and a roller, the roller being disposed on the second connection arm; where the roller is configured to be capable of entering the connection groove from the first end of the connection groove in the third direction and sliding out of the connection groove from the second end of the connection groove.

The battery cell production system further includes a first lifting assembly, a second lifting assembly, and a transmission mechanism; where the first lifting assembly is disposed at a first end of the first guide rail, the second lifting assembly is disposed at a second end of the first guide rail, the transmission mechanism is disposed above the first guide rail; the traction mechanism pulls the fixing apparatus to move from the first end of the first guide rail to the second end of the first guide rail; the second lifting assembly raises the fixing apparatus that has moved to the second end of the first guide rail; the transmission mechanism transports the raised fixing apparatus from above the second end of the first guide rail to above the first end of the first guide rail; the first lifting assembly lowers the fixing apparatus transported to above the first end of the first guide rail to the first end of the first guide rail; where during the process in which the second lifting assembly raises the fixing apparatus that has moved to the second end of the first guide rail, the raised fixing apparatus is automatically disengaged from a subsequent fixing apparatus; and during the process in which the first lifting assembly lowers the fixing apparatus transported to above the first end of the first guide rail to the first end of the first guide rail, the lowered fixing apparatus is automatically connected to a preceding fixing apparatus.

In the above technical solution, the provision of the battery cell production system including the first lifting assembly, the second lifting assembly, and the transmission mechanism enables procedural replacement between a battery cell preform that has undergone welding and dust removal and a battery cell preform that needs welding and dust removal, reducing the number of interruptions required during the entire battery production.

### BRIEF DESCRIPTION OF DRAWINGS

To more clearly illustrate the technical solutions in the embodiments of the present application, the drawings needed in the description of the embodiments will be briefly introduced below. Obviously, the drawings in the following description are only some embodiments of the present application, and for those of ordinary skill in the art, other drawings can be obtained according to these drawings without creative efforts.
FIG. 1 is a schematic structural diagram of a battery cell preform;
FIG. 2 is a schematic diagram of a partial structure of the battery cell preform in FIG. 1;
FIG. 3 is a schematic structural diagram of a fixing apparatus and a battery cell preform according to some embodiments of the present application;
FIG. 4 is a schematic structural diagram of a fixing apparatus and a battery cell preform according to some embodiments of the present application from another perspective;
FIG. 5 is a top view of the fixing apparatus and the battery cell preform in FIG. 3;
FIG. 6 is a bottom view of the fixing apparatus and the battery cell preform in FIG. 3;
FIG. 7 is a rear view of the fixing apparatus and the battery cell preform in FIG. 3;
FIG. 8 is a front view of the fixing apparatus and the battery cell preform in FIG. 3;
FIG. 9 is a schematic structural diagram of a battery cell production system according to some embodiments of the present application;
FIG. 10 is a top view of the battery cell production system in FIG. 9;
FIG. 11 is a top view of a battery cell production system according to another embodiment of the present application; and
FIG. 12 is a schematic diagram of a partial structure of a traction wheel and a traction mechanism of the battery cell production system according to some embodiments of the present application.

### Description of reference signs:

1. fixing apparatus, 10. first support base, 11. first slide rail, 12. second slide rail, 20. carrier, 30. clamping assembly, 31. first clamping member, 32. second clamping member, 33. third clamping member, 34. fourth clamping member, 40. drive assembly, 41. clamp opening mechanism, 410. pressing block, 411. linkage mechanism, 42. elastic mechanism, 50. second support base, 51. slide rail, 52. first limiting block, 53. second limiting block, 54. first spring, 60. traction fixing member, 61. traction groove, 70. first connection mechanism, 71. first connection arm, 72. connection groove, 80. second connection mechanism, 81. second connection arm, 82. roller, 1000. battery cell production system, 2. first guide rail, 3. welding apparatus, 4. dust removal apparatus, 5. second guide rail, 6. traction mechanism, 62. traction wheel, 7. first lifting assembly, 8. second lifting assembly, 9. transmission mechanism, 100. welding station, 200. dust removal station, 2000. battery cell preform, 2100. hollow electrode terminal, 2200. gap, 2300. tab, 2400. housing, and 2500. battery core.

### DESCRIPTION OF EMBODIMENTS

The technical solutions in the embodiments of the present application will be clearly and completely described below in conjunction with the drawings in the embodiments of the present application. Obviously, the described embodiments are only part of the embodiments of the present application, not all embodiments. Based on the embodiments in the present application, all other embodiments obtained by those of ordinary skill in the art without creative efforts fall within the protection scope of the present application.

Unless otherwise defined, all technical and scientific terms used herein have the same meaning as commonly understood by those skilled in the technical field of the present application; the terms used herein are only for the purpose of describing specific embodiments and are not intended to limit the present application; the terms "including" and "having" in the specification and claims of the present application and the above description of the drawings as well as any variations thereof are intended to cover non-exclusive inclusions. For example, a process, method, system, product, or device that includes a series of steps or units is not limited to the listed steps or units, but optionally also includes steps or units not listed, or optionally also includes other steps or units inherent to these processes, methods, products, or devices.

Reference herein to "embodiment" means that a particular feature, structure, or characteristic described in connection with the embodiment may be included in at least one embodiment of the present application. The appearance of the phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the description of the embodiments of the present application, the technical terms "first", "second", "third", or the like are only used to distinguish different objects and cannot be understood as indicating or implying relative importance or implicitly indicating the number, specific order, or primary-secondary relationship of the indicated technical features. In the description of the embodiments of the present application, "multiple" means two or more (including two), for example, two, three, or the like, unless otherwise specifically defined, similarly, "multiple groups" refers to two or more groups (including two groups), and "multiple pieces" refers to two or more pieces (including two pieces).

In the description of the embodiments of the present application, the term "and/or" is merely an association relationship describing associated objects, indicating that three relationships may exist, for example, A and/or B may indicate: A exists alone, A and B exist simultaneously, and B exists alone. In addition, the character "/" herein generally indicates that the associated objects before and after are in an "or" relationship.

In the description of the embodiments of the present application, the orientations or positional relationships indicated by the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like are based on the relative orientations or positional relationships of the components in a specific posture (as shown in the drawings) as shown in the drawings, and are only for the convenience of describing the embodiments of the present application and simplifying the description, rather than indicating or implying that the referred device or element must have a specific orientation, be constructed and operated in a specific orientation, and therefore cannot be understood as a limitation on the embodiments of the present application.

In the description of the embodiments of the present application, unless otherwise clearly specified and limited, the technical terms "mount", "connect", "join", "fix", or the like should be understood in a broad sense, for example, it may be a fixed connection, or a detachable connection, or integrated; it may be a mechanical connection, or an electrical connection; it may be a direct connection, or an indirect connection through an intermediate medium, or a communication inside two elements or an interaction relationship between two elements. For those of ordinary skill in the art, the specific meanings of the above terms in the embodiments of the present application can be understood according to specific situations.

In the present application, the battery cell may include a lithium-ion battery, a sodium-ion battery, or a magnesium-ion battery, or the like, and the battery cell may be cylindrical, flat, or other shapes, or the like. The battery cell is generally divided into three types according to the packaging method: cylindrical battery cell, square battery cell, and pouch battery cell. The battery cell preform refers to the structure of the battery cell before welding the electrode terminal. The following embodiments, for convenience of description, take a lithium-ion battery as an example.

In the new energy field, lithium-ion batteries have become one of the key points of high-tech development due to advantages such as high voltage, high capacity, low consumption, no memory effect, no pollution, small size, small internal resistance, less self-discharge, and many cycles.

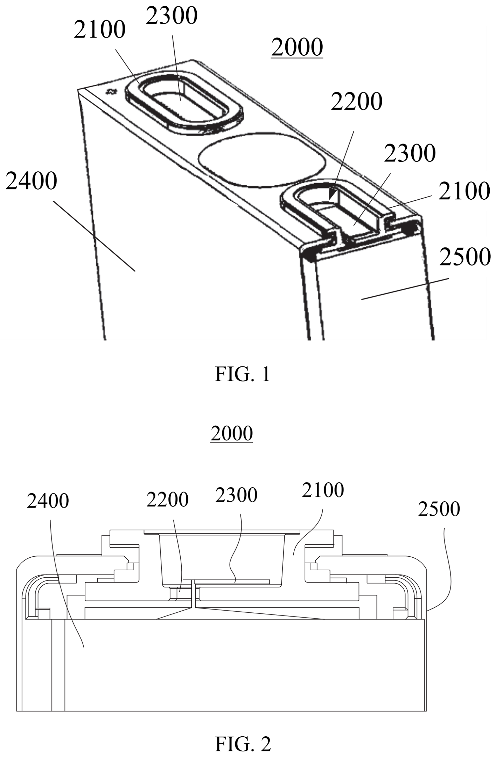

To adapt to market demand, the applicant has developed a new battery cell. Please refer to FIG. 1 and FIG. 2, where FIG. 1 is a schematic structural diagram of a new battery cell preform developed by the applicant, and FIG. 2 is a schematic diagram of a partial structure of the battery cell preform in FIG. 1. The battery cell preform 2000 includes a housing 2400, a battery core 2500, a bottom end cover (not shown), and a hollow electrode terminal 2100; where the battery core 2500 is loaded into the housing 2400 from a bottom port of the housing 2400, and the bottom end cover seals the bottom of the housing 2400; the hollow electrode terminal 2100 is embedded in a top wall of the housing 2400, and the hollow electrode terminal 2100 includes an annular side wall and a bottom wall, and the bottom wall of the hollow electrode terminal 2100 has an opening (not labeled); the battery core 2500 has a tab 2300, the tab 2300 is inserted into the hollow electrode terminal 2100 from the opening of the bottom wall of the hollow electrode terminal 2100 and is bent and welded together with the bottom wall of the hollow electrode terminal 2100. The hollow electrode terminal 2100 of the new battery cell preform 2000 is directly welded to the tab 2300, so the welding process produces strip-shaped weld marks, and during the dust removal process, a dust removal brush needs to move back and forth in the width direction of the tab 2300. Moreover, there is a gap 2200 between the tab 2300 and a side wall of the bottom wall opening of the hollow electrode terminal 2100, and a large amount of welding slag and other substances are produced during laser welding and other processes. Due to the small size of the welding slag, it is susceptible to being attracted to structures such as electrode plates, or falling into the interior of the battery cell preform 2000 through the gap 2200 of the battery cell preform 2000, causing contamination and adversely affecting the use effect or service life of the battery. Therefore, during both the welding and dust removal processes of the battery cell preform 2000, the battery cell preform 2000 is kept lying flat, that is, the gap 2200 of the battery cell preform 2000 is located on the side rather than the top.

In the lithium-ion battery production process, welding is an important link in the battery production process, and it is necessary to fix the battery cell preform during the welding process and during the dust removal process after welding. Since the battery cell preform is placed vertically in existing process of welding, the space size for accommodating the battery cell preform in the fixing apparatus for fixing the battery in the prior art is usually adjustable in the vertical direction. Therefore, the existing fixing apparatus cannot be used for the new battery cell preform 2000 developed by the applicant.

To address one or more of the above technical problems, an embodiment of the present application provides a fixing apparatus, where the fixing apparatus is configured to fix a battery cell preform and includes a first support base, a carrier, a clamping assembly, and a drive assembly, where the carrier is disposed on top of the first support base; the clamping assembly is disposed on the first support base; the clamping assembly includes a first clamping member, a second clamping member, a third clamping member, and a fourth clamping member, the first clamping member and the second clamping member are disposed on opposite sides of the carrier in a first direction; the third clamping member and the fourth clamping member are disposed on opposite sides of the carrier in a second direction; the second direction and the first direction intersect and both are substantially parallel to a horizontal direction; the drive assembly is disposed on the first support base and connected to the clamping assembly; and the drive assembly is configured to be capable of driving the first clamping member and the second clamping member to move away from or toward each other in the first direction, and capable of driving the third clamping member and the fourth clamping member to move away from or toward each other in the second direction. In this manner, the space of the fixing apparatus for accommodating the battery cell preform 2000 can be adaptively adjusted in the horizontal direction according to the shape and/or size of the battery cell preform 2000.

The present application will be described in detail below in conjunction with the drawings and embodiments.

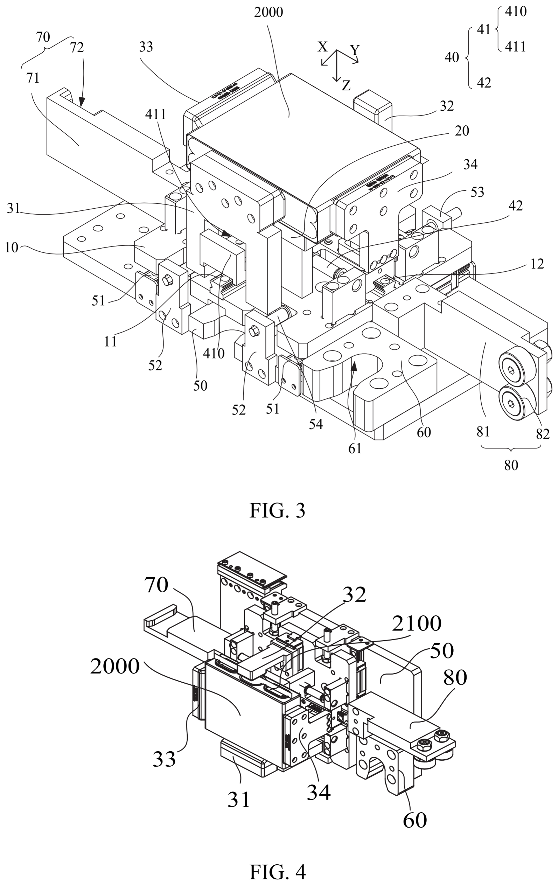

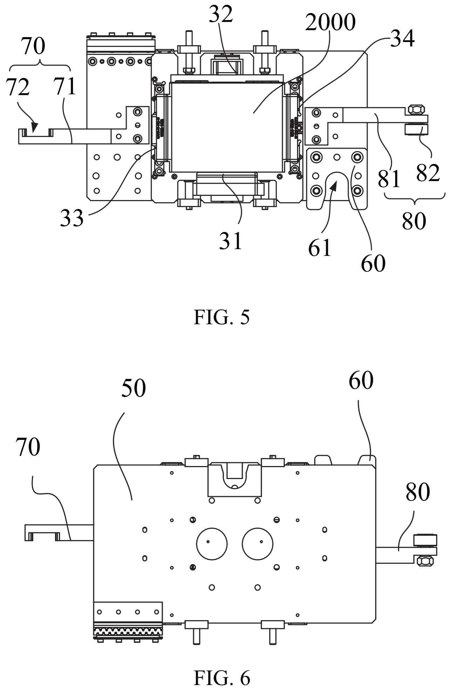

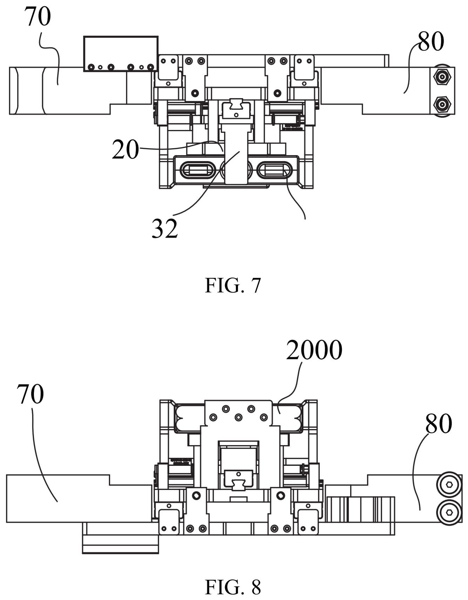

Referring to FIG. 3 to FIG. 8, where FIG. 3 is a schematic structural diagram of a fixing apparatus 1 and a battery cell preform 2000 according to some embodiments of the present application; FIG. 4 is a schematic structural diagram of the fixing apparatus 1 and the battery cell preform 2000 according to some embodiments of the present application from another perspective; FIG. 5 is a top view of the fixing apparatus and the battery cell preform in FIG. 3; FIG. 6 is a bottom view of the fixing apparatus 1 and the battery cell preform 2000 in FIG. 3; FIG. 7 is a rear view of the fixing apparatus 1 and the battery cell preform 2000 in FIG. 3; and FIG. 8 is a front view of the fixing apparatus 1 and the battery cell preform 2000 in FIG. 3.

The fixing apparatus 1 provided in the present application is configured to fix the battery cell preform 2000 and includes a first support base 10, a carrier 20, a clamping assembly 30, and a drive assembly 40.

The first support base 10 is configured to mount the carrier 20, the clamping assembly 30, and/or the drive assembly 40. The shape of the first support base 10 may be plate-shaped, so that the mounting surface of the first support base 10 is relatively flat, facilitating the mounting and fixation of the carrier 20, the clamping assembly 30, and/or the drive assembly 40.

The carrier 20 is disposed on top of the first support base 10 and is configured to support the battery cell preform 2000, where the top refers to the side of the first support base 10 away from the ground during use of the fixing apparatus 1. In some embodiments, the carrier 20 may be a support plate, and the shape and material of the carrier 20 may be selected as needed, and are not specifically limited in the present application.

The clamping assembly 30 is disposed on the first support base 10 and is configured to define a space for accommodating the battery cell preform 2000, so as to stably clamp the battery cell preform 2000 from multiple directions. In some embodiments, the clamping assembly 30 may clamp the battery cell preform 2000, which is laid flat, from four faces, and the four faces may include two surfaces opposite in the first direction and two surfaces opposite in the second direction. Specifically, the clamping assembly 30 may include the first clamping member 31, the second clamping member 32, the third clamping member 33, and the fourth clamping member 34.

The first clamping member 31 and the second clamping member 32 are disposed on opposite sides of the carrier 20 in the first direction to clamp the battery cell preform 2000 from the first direction; and the third clamping member 33 and the fourth clamping member 34 are disposed on opposite sides of the carrier 20 in the second direction to clamp the battery cell preform 2000 from the second direction, where the second direction and the first direction intersect and both are substantially parallel to the horizontal direction, and the first direction and the second direction are related to the shape of the battery cell preform 2000. For example, when the shape of the battery cell preform 2000 is a cube or a cuboid, the first direction and the second direction are perpendicular to each other. In some embodiments, the first direction may be the X direction in FIG. 1, and the second direction may be the Y direction in FIG. 1. In some embodiments, the first clamping member 31, the second clamping member 32, the third clamping member 33, and the fourth clamping member 34 may each be a clamping plate, clamping block, gripper, or the like, implementing the fixation of the battery cell preform 2000 by compressing the battery cell preform 2000, and the sizes and shapes of the first clamping member 31, the second clamping member 32, the third clamping member 33, and the fourth clamping member 34 may be the same or different, and may be selected as needed. In some embodiments, the first clamping member 31, the second clamping member 32, the third clamping member 33, and/or the fourth clamping member 34 may include a protective member, the protective member may directly contact the battery cell preform 2000, and the material of the protective member may be an elastic material such as rubber or silicone to reduce the risk of damage to the battery cell preform 2000 due to friction, collision, or compression in clamping the battery cell preform 2000.

In some embodiments, the two hollow electrode terminals 2100 of the battery cell preform 2000 may be exposed through the second clamping member 32 for subsequent welding and/or dust removal process. For example, the second clamping member 32 is plate-shaped, covering a side of the battery cell preform 2000 on which the two hollow electrode terminals 2100 are disposed, and has two openings spaced apart, the two openings exposing the two hollow electrode terminals 2100; or, the second clamping member 32 is strip-shaped and has a width less than or equal to the spacing between the two hollow electrode terminals 2100, so that the second clamping member 32 is disposed in the area between the two hollow electrode terminals 2100 without blocking the two hollow electrode terminals 2100. In other embodiments, the first clamping member 31, the second clamping member 32, the third clamping member 33, and the fourth clamping member 34 may alternatively be other structures such as grippers.

Further, in some embodiments, the first support base 10 is provided with a first slide rail 11 and a second slide rail 12, the first slide rail 11 and the second slide rail 12 are arranged to intersect each other. For example, the first slide rail 11 is disposed in the first direction, the second slide rail 12 is disposed in the second direction, the first clamping member 31 and the second clamping member 32 are disposed on the first slide rail 11, and the third clamping member 33 and the fourth clamping member 34 are disposed on the second slide rail 12.

The drive assembly 40 is disposed on the first support base 10 and connected to the clamping assembly 30. The drive assembly 40 may also be referred to as a drive device or a power device, configured to provide power to the clamping assembly 30 and make the clamping assembly 30 operate, and the drive sources of the drive assembly 40 for generating the power are various. For example, in some embodiments, the drive source of the drive assembly 40 may be pneumatic, electrically-actuated, or the like, where pneumatic systems use air as the drive source with pneumatic cylinders serving as representative devices that convert compressed air energy into linear motion for power delivery; and electrically-actuated systems use electrical energy as the drive source with electric motors as representative devices that transform electrical energy into mechanical energy for power delivery.

In the embodiments of the present application, the device of the drive assembly 40 including a pneumatic cylinder is used as an example for description. The drive assembly 40 is configured to be capable of driving the first clamping member 31 and the second clamping member 32 to move away from or toward each other in the first direction, and capable of driving the third clamping member 33 and the fourth clamping member 34 to move away from or toward each other in the second direction. When the first clamping member 31 and the second clamping member 32 move away from each other in the first direction, and the third clamping member 33 and the fourth clamping member 34 move away from each other in the second direction, the clamping space defined by the clamping assembly 30 becomes larger, facilitating the placement of the battery cell preform 2000; and when the first clamping member and the second clamping member 32 move toward each other in the first direction, and the third clamping member 33 and the fourth clamping member 34 move toward each other in the second direction, the battery cell preform 2000 can be clamped for subsequent work.

In the above embodiments of the present application, the clamping assembly 30 including the first clamping member 31, the second clamping member 32, the third clamping member 33, and the fourth clamping member 34 is provided, and the drive assembly 40 is capable of driving the first clamping member 31 and the second clamping member 32 to move away from or toward each other in the first direction, and capable of driving the third clamping member 33 and the fourth clamping member 34 to move away from or toward each other in the second direction, such that the space for accommodating the battery cell preform 2000 in the fixing apparatus 1 can be adaptively adjusted in the horizontal direction according to the shape and/or size of the battery cell preform 2000, expanding the application range of the fixing apparatus 1 in the present application.

In some embodiments, the drive assembly 40 includes a clamp opening mechanism 41 and an elastic mechanism 42, where the clamp opening mechanism 41 is connected to the clamping assembly 30, and the elastic mechanism 42 is connected to the clamping assembly 30.

In the embodiments of the present application, the clamp opening mechanism 41 refers to a mechanical structure that can drive the clamping assembly 30 to open, making the clamping space defined by the clamping assembly 30 larger. Specifically, in some embodiments, the clamp opening mechanism 41 is configured to be capable of driving the first clamping member 31 and the second clamping member 32 to move away from each other in the first direction, and capable of driving the third clamping member 33 and the fourth clamping member 34 to move away from each other in the second direction.

The elastic mechanism 42 refers to a mechanical structure that can drive the clamping assembly 30 to close, making the clamping space defined by the clamping assembly 30 smaller. Specifically, in some embodiments, the elastic mechanism 42 is configured to be capable of driving the first clamping member 31 and the second clamping member 32 to move toward each other in the first direction, and capable of driving the third clamping member 33 and the fourth clamping member 34 to move toward each other in the second direction. Further, in some embodiments, the elastic mechanism 42 can be implemented by a spring.

In the above embodiments, the clamp opening mechanism 41 is configured to move the first clamping member 31 and the second clamping member 32 away from each other and move the third clamping member 33 and the fourth clamping member 34 away from each other, and the elastic mechanism 42 is configured to move the first clamping member 31 and the second clamping member 32 toward each other and move the third clamping member 33 and the fourth clamping member 34 toward each other, resulting in a simple structure and convenient operation.

In some embodiments, the clamp opening mechanism 41 includes a pressing block 410 and a linkage mechanism 411. The pressing block 410 and the first clamping member 31 are disposed on a same side of the carrier 20; and the linkage mechanism 411 is connected to the pressing block 410, the second clamping member 32, the third clamping member 33, and the fourth clamping member 34 respectively, where when an external force is applied to the pressing block 410 in the first direction, the linkage mechanism 411 drives the second clamping member 32 to move away from the first clamping member 31, drives the third clamping member 33 and the fourth clamping member 34 to move away from each other in the second direction, and drives the elastic mechanism 42 to generate elastic potential energy; and when the external force applied to the pressing block 410 disappears, the elastic mechanism 42 releases the elastic potential energy, drives the second clamping member 32 to move toward the first clamping member 31, drives the third clamping member 33 and the fourth clamping member 34 to move toward each other in the second direction, and drives the pressing block 410 to return to its original position through the linkage mechanism.

Specifically, in some embodiments, the external force applied to the pressing block 410 may be exerted by an external pneumatic cylinder. Under the action of the external force, the pressing block 410 is pressed into engagement with the second clamping member 32, and the pressing block 410 drives the third clamping member 33 and the fourth clamping member 34 on both sides to move away from each other in the second direction through the linkage mechanism 411, achieving the clamp opening action of the fixture. When the battery cell preform 2000 is placed on the carrier 20, the external pneumatic cylinder retracts from the pressing block 410, the elastic mechanism 42 provides elastic force to drive the third clamping member 33 and the fourth clamping member 34 to move toward each other in the second direction, clamping the battery cell preform 2000 in the second direction, while the linkage mechanism 411 drives the second clamping member 32 to move toward the first clamping member 31, clamping the battery cell preform 2000 in the first direction, thereby securely clamping the battery cell preform 2000 at its two opposite faces in the first direction and at its two opposite faces in the second direction.

The linkage mechanism 411, also known as a low-pair mechanism, is a type of mechanical component, referring to a mechanism composed of several (more than two) elements with definite relative motion connected by low pairs (revolute pairs or prismatic pairs). Since most members in the mechanism are rod-shaped, the rod-shaped members are often called rods. A low pair features surface contact and offers good wear resistance. In addition, the contact surfaces of the revolute pairs and the prismatic pairs are cylindrical and planer respectively, easy to manufacture and easy to achieve high dimensional accuracy. The linkage mechanism 411 offers diverse motion modes, such as rotation, oscillation, linear movement, and planar or spatial complex motions, and can therefore be used to achieve both predefined motion patterns and predetermined trajectories.

In the above embodiments, the clamp opening mechanism 41 includes the pressing block 410 and the linkage mechanism 411, and with an external force applied to the pressing block 410, the linkage mechanism can drive the second clamping member 32 to move away from the first clamping member 31, and drive the third clamping member 33 and the fourth clamping member 34 to move away from each other in the second direction, and when the external force applied to the pressing block 410 is withdrawn, the elastic mechanism 42 can drive the second clamping member 32 to move toward the first clamping member 31, and drive the third clamping member 33 and the fourth clamping member 34 to move toward each other in the second direction. This achieves the variation of the clamping space for the battery cell preform 2000 merely through application or release of pressure on the pressing block 410, resulting a simple and efficient structure with a high level of automation.

In some embodiments, the fixing apparatus 1 further includes a second support base 50, the second support base 50 being disposed at a bottom of the first support base 10; where the first support base 10 is configured to be capable of sliding relative to the second support base 50 in the first direction.

In some embodiments, the second support base 50 is floatably disposed at the bottom of the first support base 10, where the bottom refers to the side of the first support base 10 facing the ground during use of the fixing apparatus 1. In other words, the second support base 50 can move within a certain range in a direction substantially parallel to the bottom of the first support base 10 to adapt to battery cell preforms 2000 of different shapes and sizes, significantly enhancing the versatility and flexibility of the fixing apparatus 1 of the present application. The shape of the second support base 50 may also be plate-shaped, so that the second support base 50 is parallel to the first support base 10, facilitating the movement of the second support base 50.

In the above embodiments of the present application, when the welding apparatus or the dust removal apparatus needs to be positioned with respect to the battery cell preform 2000, the battery cell preform 2000 is allowed to float in the first direction, reducing the risk of damaging the battery cell preform 2000 due to excessive movement distance of the welding apparatus or the dust removal apparatus, and also playing a role in determining the defocus amount.

In some embodiments, the second support base 50 is provided with a slide rail 51, a first limiting block 52, and a second limiting block 53; the first support base 10 is slidably disposed on the slide rail 51; the first limiting block 52 and the second limiting block 53 are configured to be capable of limiting the range of sliding of the first support base 10 relative to the second support base 50 in the first direction.

The slide rail 51 extends in the first direction, thereby enabling the second support base 50 to slide in the first direction. The provision of the slide rail 51 functions as a track for the sliding of the first support base 10, reducing the risk of wobbling in other directions. Further, in some embodiments, the second support base 50 is provided with two slide rails 51, the two slide rails 51 are parallel and spaced apart to further reduce the risk of rotation of the second support base 50 along a single slide rail 51.

The first limiting block 52 and the second limiting block 53 can limit the sliding of the first support base 10 at two positions, limiting the range of the sliding of the first support base 10, reducing the risk of the first support base 10 slipping off. Further, in some embodiments, there are two first limiting blocks 52, and there may also be two second limiting blocks 53, and the two first limiting blocks 52 are spaced apart and parallel in the second direction, where one first limiting block 52 and one second limiting block 53 are opposite in the first direction, and the other first limiting block 52 and the other second limiting block 53 are opposite in the first direction.

In some embodiments, in the first direction, the fixing apparatus 1 has a front side and a back side; the first limiting block 52 is disposed on the back side of the first support base 10, the second limiting block 53 is disposed on the front side of the first support base 10; and a first spring 54 is disposed between the first limiting block 52 and the first support base 10.

The front side and the back side of the fixing apparatus 1 are both outer surfaces of the fixing apparatus 1, where the front side refers to the surface exposing the side of the two hollow electrode terminals 2100 of the battery cell preform 2000, and can also be understood as the surface facing the welding apparatus or the dust removal apparatus during use, and the back side is the surface opposite to the front side.

During use, the welding apparatus or the dust removal apparatus moves relative to the battery cell preform 2000 to allow the welding apparatus or the dust removal apparatus to align with the two hollow electrode terminals 2100 of the battery cell preform 2000, thereby compressing the first spring 54 to generate elastic potential energy, driving the second support base 50 to slide in the first direction, enabling the battery cell preform 2000 to float in the slide rail direction, and playing a role in determining the defocus amount. When the process is completed, the welding apparatus or the dust removal apparatus moves away from the battery cell preform 2000, and the first spring 54 releases the elastic potential energy, driving the second support base 50 to return to the original position for next use. Therefore, the fixing apparatus 1 provided in the present application can be used repeatedly. Further, in some embodiments, a second spring is disposed between the second limiting block 53 and the first support base 10.

In some embodiments thereof, the fixing apparatus 1 further includes a traction fixing member 60, the traction fixing member 60 being fixed on the second support base 50. For example, the traction fixing member 60 is fixed to the top surface of the second support base 50.

The traction fixing member 60 is configured to connect to a traction mechanism (not shown), thereby enabling the fixing apparatus 1 to follow the traction mechanism to move to a predetermined station, such as a welding station and a dust removal station, for corresponding operations, improving the degree of automation.

In some embodiments, the traction fixing member 60 is provided with a traction groove 61. The traction groove 61 may extend from the bottom surface to the top surface of the traction fixing member 60. For example, the traction groove 61 is a notch at an edge of the traction fixing member 60, facilitating the insertion and disengagement of a traction member of the traction mechanism.

In some embodiments, the fixing apparatus 1 may further include a first connection mechanism 70 and a second connection mechanism 80, where the first connection mechanism 70 and the second connection mechanism 80 are respectively fixed on the second support base 50 and disposed on opposite sides of the first support base 10 in the second direction.

The first connection mechanism 70 is configured to connect to the second connection mechanism 80 of an adjacent fixing apparatus 1, and the second connection mechanism 80 is configured to connect to the first connection mechanism 70 of an adjacent fixing apparatus 1, thereby facilitating the mounting and fixation of two adjacent fixing apparatuses 1. Multiple fixing apparatuses 1 provided in the present application can be applied to large-scale production processes, and the mounting and disassembly of the fixing apparatuses 1 can be facilitated through traction, making the process of producing batteries more flexible.

In some embodiments, the first connection mechanism 70 includes a first connection arm 71, and a surface of the first connection arm 71 is provided with a connection groove 72, where the connection groove 72 extends in a third direction, the connection groove 72 has opposite first end and second end in the third direction, the first end and the second end are both open ends, and the third direction is a vertical direction. The second connection mechanism 80 includes a second connection arm 81 and a roller 82, the roller 82 being disposed on the second connection arm 81; where the roller 82 is configured to be capable of entering the connection groove 72 from the first end of the connection groove 72 in the third direction and sliding out of the connection groove 72 from the second end of the connection groove 72.

The first connection mechanism 70 is connected to the roller 82 of the adjacent second connection mechanism 80 through the connection groove 72, where the connection groove 72 extends in the third direction, and the third direction is the vertical direction and specifically may be the Z direction in FIG. 1.

Further, the first connection arm 71 and the second connection arm 81 may both be cuboidal structures or cylindrical structures and are of a certain length so as to maintain a distance between two adjacent fixing apparatuses when different processes are performed at different stations, reducing mutual interference between the two processes.

An outer diameter of the roller 82 matches a width of the connection groove 72, enabling the roller 82 to slide in the third direction in the connection groove 72 without escaping from the connection groove 72 in the first direction or the second direction. The design of the roller 82 can reduce friction between the first connection mechanism 70 and the second connection mechanism 80 during mounting.

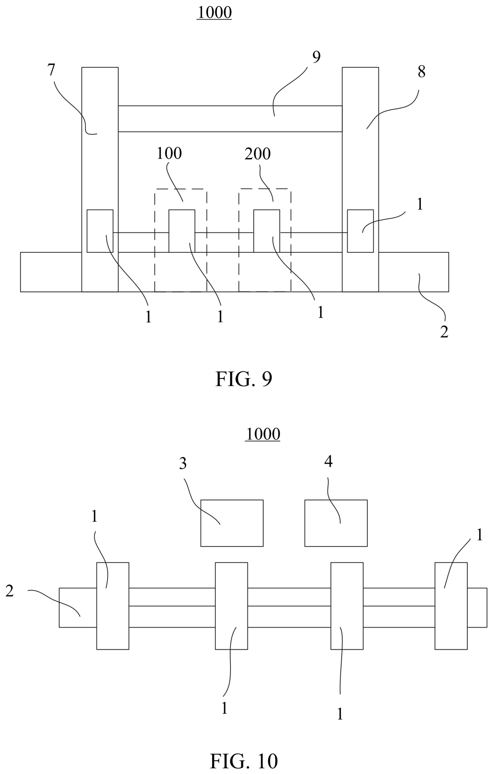

In the above embodiments, the first connection mechanism 70 includes the first connection arm 71, the surface of the first connection arm 71 is provided with the connection groove 72, and the second connection mechanism 80 includes the second connection arm 81 and the roller 82, the roller 82 being disposed on the second connection arm 81. The roller 82 is capable of entering the connection groove 72 from the first end of the connection groove 72 in the third direction and sliding out of the connection groove 72 from the second end of the connection groove 72, two adjacent fixing apparatuses 1 can be mounted by sliding, and the design of the roller 82 can reduce friction between the first connection mechanism 70 and the second connection mechanism 80 during mounting, improving safety performance and service life. Referring also to FIG. 9, FIG. 9 is a schematic structural diagram of a battery cell production system 1000 according to some embodiments of the present application. The fixing apparatus 1 is raised by the second lifting assembly 8 and lowered by the first lifting assembly 7, so that the fixing apparatus 1 is automatically disengaged from the rear fixing apparatus 1 during raising, and automatically connected to the front fixing apparatus 1 during lowering.

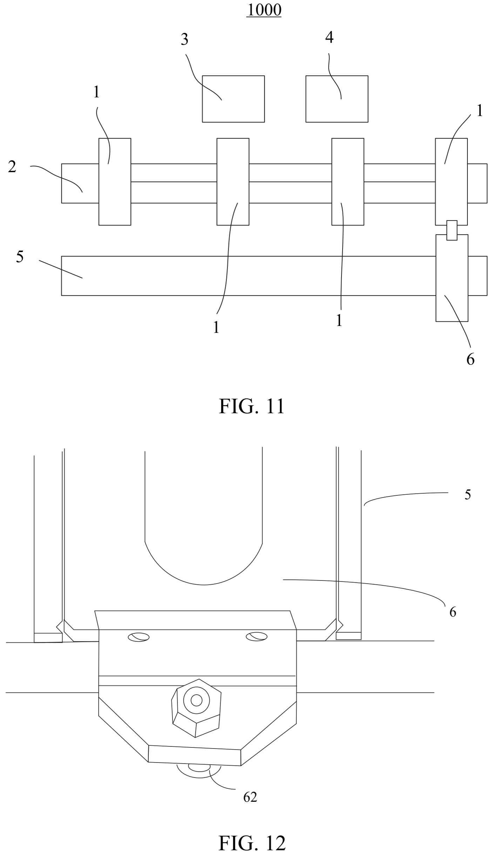

Referring also to FIG. 10 to FIG. 12, where FIG. 10 is a top view of the battery cell production system 1000 in FIG. 9; FIG. 11 is a top view of a battery cell production system 1000 according to another embodiment of the present application; and FIG. 12 is a schematic diagram of a partial structure of a traction wheel 62 and a traction mechanism 6 of a battery cell production system 1000 according to some embodiments of the present application.

In the battery cell production system 1000 provided in the present application, the battery cell production system 1000 includes the fixing apparatus 1 provided in any one of the above embodiments.

The battery cell production system 1000 of the embodiments of the present application is configured to produce any type of battery such as a power battery or an energy storage battery. The application scenarios of the power battery include but are not limited to vehicles, ships, aircraft, spacecraft, power tools, electric toys, and various mobile terminals. The application scenarios of the energy storage battery include but are not limited to solar power generation systems, hydropower generation systems, and wind power generation systems.

In the embodiments, since the battery cell production system 1000 includes the fixing apparatus 1 provided in any one of the above embodiments, it features the technical effects of any of the above embodiments, one of which is as follows: the clamping assembly 30 including the first clamping member 31, the second clamping member 32, the third clamping member 33, and the fourth clamping member 34 is provided, and the drive assembly 40 is capable of driving the first clamping member 31 and the second clamping member 32 to move away from or toward each other in the first direction, and capable of driving the third clamping member 33 and the fourth clamping member 34 to move away from or toward each other in the second direction, such that the space for accommodating the battery cell preform 2000 in the fixing apparatus can be adaptively adjusted in the horizontal direction according to the shape and/or size of the battery cell preform 2000.

Other technical effects can refer to the above embodiments, and details are not repeated here.

In some embodiments, the battery cell production system 1000 further includes a first guide rail 2, a welding apparatus 3, and a dust removal apparatus 4. The first guide rail 2 extends in the second direction, the welding apparatus 3 and the dust removal apparatus 4 are disposed on the same side of the first guide rail 2; the fixing apparatus 1 is slidably disposed on the first guide rail 2, and is configured to pass through the welding apparatus 3 and the dust removal apparatus 4 in sequence.

The first guide rail 2 can guide the fixing apparatus 1 to move in the second direction, enabling the fixing apparatus 1 to reach different stations, such as welding station 100 or dust removal station 200, for corresponding processes.

The welding apparatus 3 is configured to weld the hollow electrode terminal 2100 and the tab of the battery cell preform 2000, and welding slag is produced during the welding process. The dust removal apparatus 4 is configured to clean the welding slag produced in the welding process, reducing contamination of the welding slag to the battery cell preform 2000, or the like, and improving the use effect or service life of the produced battery. In the embodiments of the present application, the welding apparatus 3 and the dust removal apparatus 4 are disposed on a same side of the first guide rail 2, and therefore, in the battery production process, the welding operation and the dust removal operation can be performed on the same side. Further, after the welding process is completed, the dust removal process can be directly entered, making the battery production process simple and efficient.

In this embodiment, the battery cell production system 1000 includes the first guide rail 2, the welding apparatus 3, and the dust removal apparatus 4; the first guide rail 2 extends in the second direction, the welding apparatus 3 and the dust removal apparatus 4 are disposed on a same side of the first guide rail 2; and the fixing apparatus 1 is slidably disposed on the first guide rail 2, and is configured to pass through the welding apparatus 3 and the dust removal apparatus 4 in sequence, such that one fixing apparatus 1 can enable the battery cell preform 2000 to participate in different processes, improving production efficiency.

Referring also to FIG. 11 and FIG. 12, in some embodiments, the fixing apparatus 1 is any one of the above fixing apparatuses 1 having the traction fixing member 60; the battery cell production system 1000 further includes a second guide rail 5 and a traction mechanism 6, where the second guide rail 5 is disposed parallel to the first guide rail 2 on a side away from the welding apparatus 3, the traction mechanism 6 is slidably disposed on the second guide rail 5, and the traction mechanism 6 is configured to pull the fixing apparatus 1 to move in the second direction through the traction fixing member 60.

The second guide rail 5 is configured to guide the fixing apparatus 1 to move in the second direction, enabling the fixing apparatus 1 to enter the next process after completing the welding and dust removal processes.

Referring also to FIG. 12, the traction mechanism 6 is connected to the traction fixing member 60 of the fixing apparatus 1 and is configured to enable the mobile fixing apparatus 1 to follow the traction mechanism 6 to move to a predetermined station for corresponding operations, improving the degree of automation. In some embodiments, the traction mechanism 6 includes a traction wheel 62, where the traction wheel 62 may be disposed in the traction groove 61 of the fixing apparatus 1, and the traction wheel 62 can slide, thereby reducing friction. Specifically, in some embodiments, the traction groove 61 has opposite third end and fourth end in the third direction, the third end and the fourth end are both open ends, and the third direction is the vertical direction. The traction wheel 62 is configured to be capable of entering the traction groove 61 from the third end of the traction groove 61 in the third direction and sliding out of the traction groove 61 from the fourth end of the traction groove 61.

Further, in the embodiments, the provision of the traction groove 61 facilitates the insertion and disengagement of the traction wheel 62 of the traction mechanism 6.

Further, in some embodiments, multiple fixing apparatuses 1 are arranged side by side on the first guide rail 2 and connected to each other; while one of two adjacent fixing apparatuses 1 reaches a station at which the welding apparatus 3 is located (welding station 100), the other reaches a station at which the dust removal apparatus 4 is located (dust removal station 200); and the traction mechanism 6 drives the multiple fixing apparatuses 1 to move together in the second direction by pulling a leading fixing apparatus 1.

In the embodiments, the provision of the first connection mechanism 70 and the second connection mechanism 80 on opposite sides of the first support base 10 facilitates the connection and disengagement of two adjacent fixing apparatuses 1. Multiple fixing apparatuses 1 provided in the present application can be applied to large-scale production processes, and the fixing apparatuses 1 are connected and disengaged through traction, making the process of producing batteries more flexible. The first connection mechanism 70 includes the first connection arm 71, the surface of the first connection arm 71 is provided with the connection groove 72, and the second connection mechanism 80 includes the second connection arm 81 and the roller 82, the roller 82 being disposed on the second connection arm 81. The roller 82 is capable of entering the connection groove 72 from the first end of the connection groove 72 in the third direction and sliding out of the connection groove 72 from the second end of the connection groove 72, two adjacent fixing apparatuses 1 can be mounted by sliding, and the design of the roller 82 can reduce friction between the first connection mechanism 70 and the second connection mechanism 80 during mounting, improving safety performance and service life. While one of two adjacent fixing apparatuses 1 reaches a station at which the welding apparatus 3 is located, the other reaches a station at which the dust removal apparatus 4 is located, which allows slag cleaning to be performed immediately after welding of the battery cell preform 2000 in the fixing apparatus, improving production efficiency.

In some embodiments, the battery cell production system 1000 further includes a first lifting assembly 7, a second lifting assembly 8, and a transmission mechanism 9; where the first lifting assembly 7 is disposed at a first end of the first guide rail 2, the second lifting assembly 8 is disposed at a second end of the first guide rail 2, the transmission mechanism 9 is disposed above the first guide rail 2; the traction mechanism 6 pulls the fixing apparatus 1 to move from the first end of the first guide rail 2 to the second end of the first guide rail 2; the second lifting assembly 8 raises the fixing apparatus 1 that has moved to the second end of the first guide rail 2; the transmission mechanism 9 transports the raised fixing apparatus 1 from above the second end of the first guide rail 2 to above the first end of the first guide rail 2; the first lifting assembly 7 lowers the fixing apparatus 1 transported to above the first end of the first guide rail 2 to the first end of the first guide rail 2; where during the process in which the second lifting assembly 8 raises the fixing apparatus 1 that has moved to the second end of the first guide rail 2, the raised fixing apparatus 1 is automatically disengaged from a subsequent fixing apparatus 1; and during the process in which the first lifting assembly 7 lowers the fixing apparatus 1 transported to above the first end of the first guide rail 2 to the first end of the first guide rail 2, the lowered fixing apparatus 1 is automatically connected to a preceding fixing apparatus 1.

The first lifting assembly 7 refers to a mechanical device or apparatus with a platform or semi-enclosed platform that lowers the fixing apparatus 1 along a predetermined track in the third direction, and the second lifting assembly 8 refers to a mechanical device or apparatus with a platform or semi-enclosed platform that raises the fixing apparatus 1 along a predetermined track in the third direction. In some embodiments, the first lifting assembly 7 may include a traveling mechanism, a hydraulic mechanism, an electric control mechanism, and a support mechanism. The hydraulic oil is pressurized by a vane pump and then passes an oil filter, an explosion-proof solenoid directional valve, a throttle valve, a hydraulic check valve, and a balance valve to enter a lower end of a hydraulic cylinder, causing a piston of the hydraulic cylinder to move upward, lifting the load. The return oil from an upper end of the hydraulic cylinder flows back to an oil tank through the explosion-proof solenoid directional valve. The rated pressure is adjusted through a relief valve, and the pressure reading is monitored through a pressure gauge. The structure of the second lifting assembly 8 is similar to that of the first lifting assembly 7, and specific details can refer to the first lifting assembly 7 and are not repeated here.

The transmission mechanism 9 refers to an apparatus or device that moves the fixing apparatus 1 from one position to another position, which for example, may be implemented using a conveyor belt or a traction device, or the like.

In this embodiment, the provision of the battery cell production system 1000 including the first lifting assembly 7, the second lifting assembly 8, and the transmission mechanism 9 enables procedural replacement between a battery cell preform 2000 that has undergone welding and dust removal and a battery cell preform 2000 that needs welding and dust removal, reducing the number of interruptions required during the entire battery production.

In the several embodiments provided in the present application, it should be understood that the disclosed system, apparatus, and method may be implemented in other manners. For example, the apparatus embodiments described above are only illustrative. For example, the division of units is only a logical function division, and there may be other division methods in actual implementation. For example, multiple units or components can be combined or integrated into another system, or some features can be ignored or not executed. Another point is that the mutual coupling or direct coupling or communication connection shown or discussed may be through some interfaces, indirect coupling or communication connection of devices or units, which may be electrical, mechanical, or other forms.

In addition, functional units in various embodiments of the present application may be integrated into one processing unit, or each unit may exist physically alone, or two or more units may be integrated into one unit. The above integrated units may be implemented in the form of hardware or in the form of software functional units.

The description is for the purpose of illustrating implementations of the present application, but not to limit the patent scope of the present application. Any equivalent structural or process transformation made using the content of the specification and drawings of the present application, applied directly or indirectly in other related art, shall fall within the scope of protection of the present application.

## Claims

1. A fixing apparatus configured to fix a battery cell preform, comprising:
a first support base;
a carrier disposed on top of the first support base;
a clamping assembly disposed on the first support base, wherein the clamping assembly comprises:
a first clamping member and a second clamping member disposed on opposite sides of the carrier in a first direction;
a third clamping member and a fourth clamping member disposed on opposite sides of the carrier in a second direction,
wherein the second direction and the first direction intersect and are both substantially parallel to a horizontal direction; and
a drive assembly disposed on the first support base and connected to the clamping assembly, wherein the drive assembly is configured to be capable of driving the first clamping member and the second clamping member to move away from or toward each other in the first direction, and capable of driving the third clamping member and the fourth clamping member to move away from or toward each other in the second direction.

2. The fixing apparatus according to claim 1, wherein the drive assembly comprises:
a clamp opening mechanism connected to the clamping assembly, wherein the clamp opening mechanism is configured to be capable of driving the first clamping member and the second clamping member to move away from each other in the first direction, and capable of driving the third clamping member and the fourth clamping member to move away from each other in the second direction; and
an elastic mechanism connected to the clamping assembly, wherein the elastic mechanism is configured to be capable of driving the first clamping member and the second clamping member to move toward each other in the first direction, and capable of driving the third clamping member and the fourth clamping member to move toward each other in the second direction.

3. The fixing apparatus according to claim 2, wherein the clamp opening mechanism comprises:
a pressing block disposed on a same side of the carrier as the first clamping member; and
a linkage mechanism connected to the pressing block, the second clamping member, the third clamping member, and the fourth clamping member, wherein:
when an external force is applied to the pressing block in the first direction, the linkage mechanism drives the second clamping member to move away from the first clamping member, drives the third clamping member and the fourth clamping member to move away from each other in the second direction, and drives the elastic mechanism to generate elastic potential energy; and
when the external force applied to the pressing block disappears, the elastic mechanism releases the elastic potential energy, drives the second clamping member to move toward the first clamping member, drives the third clamping member and the fourth clamping member to move toward each other in the second direction, and drives the pressing block to return to its original position through the linkage mechanism.

4. The fixing apparatus according to claim 2 or 3, further comprising:
a second support base disposed at a bottom of the first support base, wherein:
the first support base is configured to be capable of sliding relative to the second support base in the first direction.

5. The fixing apparatus according to claim 4, wherein the second support base is provided with a slide rail, a first limiting block, and a second limiting block, wherein:
the first support base is slidably disposed on the slide rail; and
the first limiting block and the second limiting block are configured to be capable of limiting a range of sliding of the first support base relative to the second support base in the first direction.

6. The fixing apparatus according to claim 5, wherein in the first direction, the fixing apparatus has a front side and a back side, wherein:
the first limiting block is disposed on the back side of the first support base;
the second limiting block is disposed on the front side of the first support base; and
a first spring is disposed between the first limiting block and the first support base.

7. The fixing apparatus according to claim 4, further comprising:
a traction fixing member fixed on the second support base.

8. The fixing apparatus according to claim 7, wherein the traction fixing member is provided with a traction groove.

9. The fixing apparatus according to claim 8, further comprising:
a first connection mechanism and a second connection mechanism fixed on the second support base and disposed on opposite sides of the first support base in the second direction.

10. The fixing apparatus according to claim 9, wherein:
the first connection mechanism comprises a first connection arm, and a surface of the first connection arm is provided with a connection groove, wherein the connection groove extends in a third direction, and the connection groove has opposite first end and second end in the third direction, wherein the first end and the second end are both open ends, and the third direction is a vertical direction; and
the second connection mechanism comprises a second connection arm and a roller, the roller being disposed on the second connection arm, wherein the roller is configured to be capable of entering the connection groove from the first end of the connection groove in the third direction and sliding out of the connection groove from the second end of the connection groove.

11. A battery cell production system comprising the fixing apparatus according to any one of claims 1-10.

12. The battery cell production system according to claim 11, further comprising a first guide rail, a welding apparatus, and a dust removal apparatus, wherein:
the first guide rail extends in the second direction;
the welding apparatus and the dust removal apparatus are disposed on a same side of the first guide rail; and
the fixing apparatus is slidably disposed on the first guide rail and is configured to pass through the welding apparatus and the dust removal apparatus in sequence.

13. The battery cell production system according to claim 12, wherein the fixing apparatus is the fixing apparatus according to any one of claims 7-10, and the battery cell production system further comprises a second guide rail and a traction mechanism, wherein:
the second guide rail is disposed parallel to the first guide rail on a side of the first guide rail away from the welding apparatus;
the traction mechanism is slidably disposed on the second guide rail, and the traction mechanism is configured to pull the fixing apparatus to move in the second direction through the traction fixing member.

14. The battery cell production system according to claim 13, wherein the fixing apparatus is the fixing apparatus according to claim 9 or 10, and multiple fixing apparatuses are arranged side by side on the first guide rail and connected to each other, wherein:
while one of two adjacent fixing apparatuses reaches a station at which the welding apparatus is located, the other reaches a station at which the dust removal apparatus is located; and
the traction mechanism drives the multiple fixing apparatuses to move together in the second direction by pulling a leading fixing apparatus.

15. The battery cell production system according to claim 14, wherein the fixing apparatus is the fixing apparatus according to claim 10, and the battery cell production system further comprises a first lifting assembly, a second lifting assembly, and a transmission mechanism; wherein:
the first lifting assembly is disposed at a first end of the first guide rail, the second lifting assembly is disposed at a second end of the first guide rail, and the transmission mechanism is disposed above the first guide rail;
the traction mechanism pulls the fixing apparatus to move from the first end of the first guide rail to the second end of the first guide rail;
the second lifting assembly raises the fixing apparatus that has moved to the second end of the first guide rail;
the transmission mechanism transports the raised fixing apparatus from above the second end of the first guide rail to above the first end of the first guide rail; and
the first lifting assembly lowers the fixing apparatus transported to above the first end of the first guide rail to the first end of the first guide rail, wherein:
during the process in which the second lifting assembly raises the fixing apparatus that has moved to the second end of the first guide rail, the lifted fixing apparatus is automatically disengaged from a subsequent fixing apparatus; and
during the process in which the first lifting assembly lowers the fixing apparatus transported to above the first end of the first guide rail to the first end of the first guide rail, the lowered fixing apparatus is automatically connected to a preceding fixing apparatus.
